# EUROPEAN PATENT SPECIFICATION

(11) **EP 3 369 543 B1**
(45) Date of publication and mention of the grant of the patent: **01.06.2022**
(21) Application number: 15907312.1
(22) Date of filing: 30.10.2015
(51) Int. Cl.: B29C 43/24, B29C 43/28, B29D 30/38, B65H 69/00, B29C 43/34

(54) **WIRE REPLACEMENT DEVICE AND WIRE REPLACEMENT METHOD**
DRAHTERSATZVORRICHTUNG UND DRAHTERSATZVERFAHREN
DISPOSITIF DE REMPLACEMENT DE FIL ET PROCÉDÉ DE REMPLACEMENT DE FIL

(43) Date of publication of application: 05.09.2018
(73) Proprietor: IHI Corporation, Tokyo 135-8710 (JP); IHI Logistics & Machinery Corporation, Koto-ku Tokyo 135-0061 (JP)
(72) Inventor: MAEDA, Hirotomo, Tokyo 135-0061 (JP); SAKO, Naoto, Tokyo 135-0061 (JP)
(74) Representative: Oxley, Robin John George
(86) International application number: PCT/JP2015/080721
(87) International publication number: WO 2017/072948

(56) References cited:
- EP-A1- 3 124 196
- WO-A1-2007/010599
- DD-A1- 205 849
- JP-A- H06 320 628
- JP-A- 2000 136 488
- JP-A- 2008 272 966

## Description

### Technical Field

This disclosure relates to a wire replacement device and a wire replacement method. In particular, this disclosure relates to a wire replacement device and a wire replacement method for replacing a wire in a calender device that produces a rubber sheet into which a steel wire (or a cord) is inserted.

### Background Art

In a known technology, wires are drawn from a plurality of bobbins (or reels) around which wires are wound, and inserted between first rubber and second rubber, and a rubber sheet is produced using a calender device (for example, see Patent Document 1). This device includes a comb roll and a press roll for regulating a position of each wire. DD205849A1 discloses a wire replacement device according to the preamble of claim 1 and a wire replacement method according to the preamble of claim 7.

### Citation List

### Patent Literature

Patent Document 1: Japanese Unexamined Patent Publication No. 2014-176991

### Summary of Invention

### Technical Problem

Each of the comb roll and the press roll described above includes a plurality of grooves into which wires are fit. A plurality of wires is aligned by being fit onto each of the comb roll and the press roll. These rolls for aligning the wires are disposed at positions close to a rolling-mill roll of a calender device. When wires wound around a bobbin (or a reel) are terminated, or when the type of wires is changed, the wires need to be replaced with subsequent wires. When the wires are replaced (switched), a pass line and tension need to be held, and thus the subsequent wires are spliced with the preceding wires.

At the time of replacing the wires, a plurality of subsequent wires is fit into grooves of the roll and aligned. This wire fitting operation (wire alignment operation) may be performed by an operator. After this operation, the calender device is operated, and a process of producing a rubber sheet using the subsequent wires starts.

Conventionally, at the time of replacing the wires, the process of producing the rubber sheet is temporarily suspended, and thereafter the operation of fitting the wires onto the roll is performed. Then, after the wire fitting operation, the process of producing the rubber sheet is resumed. While a large number of wires are fit onto the roll, the process of producing the rubber sheet remains suspended. This wire fitting operation has reduced the operation rate of the calender device.

This disclosure describes a wire replacement device and a wire replacement method capable of improving the operation rate of the calender device.

### Solution to Problem

A wire replacement device according to a first aspect of the present invention is provided as claimed in claim 1.

### Effects of Invention

According to a wire replacement device according to a first aspect of the present invention, it is possible to improve an operation rate of a calender device.

### Brief Description of Drawings

FIG. 1 is a diagram illustrating a schematic configuration of a sheet production system to which a wire replacement device of this disclosure is applied.
FIG. 2 is a diagram illustrating a schematic configuration of the wire replacement device of FIG. 1.
FIG. 3 is a diagram illustrating a schematic configuration of the wire replacement device of FIG. 1.
FIG. 4 is a plan view illustrating a sheet production process in the wire replacement device.
FIG. 5 is a plan view illustrating a process subsequent to FIG. 4 in the wire replacement device.
FIG. 6 is a plan view illustrating a process subsequent to FIG. 5 in the wire replacement device.
FIG. 7 is a plan view illustrating a process subsequent to FIG. 6 in the wire replacement device.
FIG. 8 is a plan view illustrating a process subsequent to FIG. 7 in the wire replacement device.
FIG. 9 is a plan view illustrating a process subsequent to FIG. 8 in the wire replacement device.
FIG. 10 is a plan view illustrating a process subsequent to FIG. 9 in the wire replacement device.
FIG. 11 is a plan view illustrating a process subsequent to FIG. 10 in the wire replacement device.
FIG. 12 is a plan view illustrating a process subsequent to FIG. 11 in the wire replacement device.
FIG. 13 is a plan view illustrating a process subsequent to FIG. 12 in the wire replacement device.
FIG. 14 is a plan view illustrating a process subsequent to FIG. 13 in the wire replacement device.
FIG. 15 is a plan view illustrating a process subsequent to FIG. 14 in the wire replacement device.
FIG. 16 is a plan view illustrating a process subsequent to FIG. 15 in the wire replacement device.
FIG. 17 is a plan view illustrating a process subsequent to FIG. 16 in the wire replacement device.
FIG. 18 is a diagram illustrating a device for moving a roll holding portion.

### Description of Embodiments

A wire replacement device according to a first aspect of the present invention is provided as claimed in claim 1.

According to this wire replacement device, during the time of replacing the wires, the back end portions of the first wires and the front end portions of the second wires are joined together by the splicer. Here, since the carriages are movable, the front end portions of the second wires may be aligned in the rolls attached to the carriages before the wires are joined, that is, while the first wires are used for production of a sheet. Since the rolls are detachable from the carriages, production of the sheet using the calender device may be resumed by attaching the rolls in which the front end portions of the second wires are aligned to the calender device. In this way, by aligning the front end portions of the second wires in advance during production of the sheet using the first wires, a process (labor) of aligning the second wires after the calender device is stopped is omitted. It is possible to shorten a stop time of the calender device in the entire process. Therefore, it is possible to improve an operation rate of the calender device.

In some aspects, the wire replacement device further includes a roll holding portion detachably attached to each of the carriages to hold the one roll or the plurality of rolls. In this case, by removing the roll holding portion from the carriage and attached to the calender device, the rolls may be moved and exchanged. In this way, handling of the rolls is facilitated.

In the first aspect, each of the carriages is configured to be movable to a first position on a side of the calender device with respect to the joining position at which the splicer is located and movable to a second position on an opposite side from the calender device with respect to the joining position. After joining is performed using the splicer, the carriages may be moved to the first position on the calender device side in a state in which the front end portions of the second wires are aligned. Therefore, the carriages may be located closer to the calender device, and the rolls are easily transferred.

In the first aspect, the splicer is configured to be movable to the joining position and to a standby position separated from the joining position. In this case, moving paths of the carriages and the splicer may be made compact without interfering with the carriages and the splicer.

In some aspects, each of the carriages is configured to be allowed to pass through the joining position between the first position and the second position. In this case, the moving path of the carriages may be shortened.

In the first aspect, the wire replacement device further includes a moving path of the carriages including a circling path passing through the first position and the second position. In this case, by moving the carriages along the circling path, the rolls may be efficiently conveyed as the wires are switched.

In some aspects, the moving path includes a wire preparation path provided in the circling path or at a position branching from the circling path and passes through a third position in front of one of the creel stands in use and a fourth position in front of another one of the creel stands on standby. In this case, by moving the carriages to the fourth position, the carriages are used for an alignment operation of the wires while the creel stand is on standby. In addition, by moving the carriages to the third position, the carriages are used for an operation of supplying the wires while the creel stand is used.

In some aspects, the moving path includes a roll exchange path provided in the circling path or at a position branching from the circling path and passes in front of a roll stocker in which the one roll or the plurality of rolls for exchange is stocked. When a type of the wires is changed, the rolls need to be changed. By moving the carriages to a position ahead the roll stocker, exchange of the rolls is facilitated. "Ahead" of the stocker mentioned herein refers to a side accessible to the inside of the stocker regardless of the conveyance direction of the wires.

In some aspects, the wire replacement device further includes a controller that controls movement of the carriages. By including the controller, movement of the carriages may be controlled, and a semi-automatic operation of the wire replacement device is allowed.

A wire replacement method according to a second aspect of the present invention is provided as claimed in claim 7.

According to this wire replacement method, when the wires are replaced, the back end portions of the first wires and the front end portions of the second wires are joined together by the splicer (joining process). Here, since the carriages are movable, the front end portions of the second wires may be aligned in the rolls attached to the carriages before the joining process, that is, while the first wires are used for production of the sheet (second wire preparation process). Since the rolls are detachable from the carriages, the calender device may be operated to resume production of the sheet by attaching the rolls in which the front end portions of the second wires are aligned to the calender device (roll attaching process). In this way, by aligning the front end portions of the second wires in advance during production of the sheet using the first wires, a process (labor) of aligning the second wires after the calender device is stopped is omitted. It is possible to shorten a stop time of the calender device during the entire process. Therefore, it is possible to improve the operation rate of the calender device.

In some aspects, a roll holding portion detachably attached to each of the carriages to hold the one roll or the plurality of rolls is used, and the roll holding portion is moved from the second wire carriage to the calender device and the rolls in the second wire aligned state are attached to the calender device in the roll attaching process. In this case, the rolls may be moved and exchanged. In this way, handling of the rolls is facilitated.

In the second aspect, the wire replacement method further includes a carriage advancing process of moving the second wire carriage to which the rolls in the second wire aligned state are attached to a first position on a side of the calender device with respect to the joining position, the carriage advancing process being performed after the joining process and before the roll attaching process. After the joining process by the splicer is performed, the carriages to which the rolls in the second wire aligned state are attached may be moved to the first position on the side of the calender device (carriage advancing process). Therefore, the carriages may be located closer to the calender device, and the rolls may be easily transferred.

In the second aspect, the wire replacement method further includes a splicer retreating process of moving the splicer to a standby position separated from the joining position, the splicer retreating process being performed after the joining process. In this case, the moving paths of the carriages and the slicer may be made compact without interfering with the carriages and the slicer.

In some aspects, the second wire carriage moves to the first position by passing through the joining position in the carriage advancing process. In this case, the moving path of the carriages may be shortened.

In the second aspect, the wire replacement method further includes a roll removal process of removing the rolls from the calender device and attaching the removed rolls to a first wire carriage located at the first position, the roll removal process being performed before the joining process, and a carriage retreating process of moving the first wire carriage from the first position, the carriage retreating process being performed after the joining process and before the carriage advancing process. In this case, the carriages may efficiently convey the rolls as the wires are switched by receiving the rolls and moving from the first position.

In some aspects, the wire replacement method further includes a roll exchange process of moving the first wire carriage to a position in front of a roll stocker in which the one roll or the plurality of rolls for exchange is stocked, the roll exchange process being performed after the carriage retreating process. In this case, by moving the carriages to the position in front of the roll stocker, exchange of the rolls is facilitated.

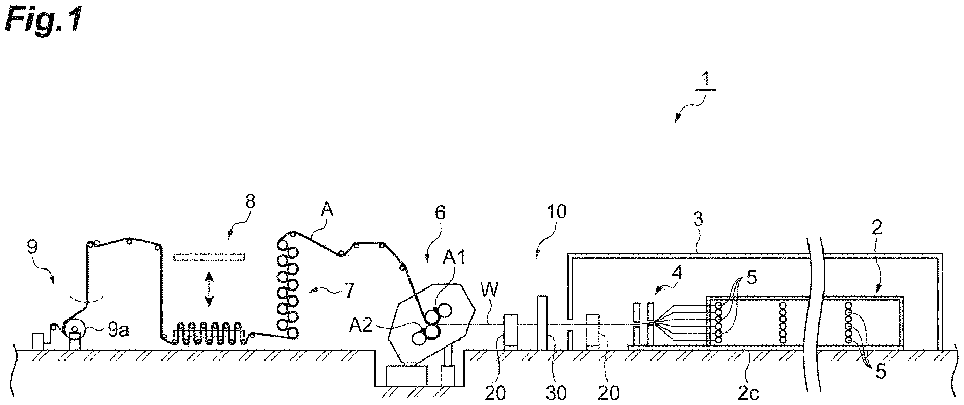

Hereinafter, an embodiment of this disclosure will be described in more detail. In this specification, when a term "upstream" or "downstream" is used, a conveyance direction of a steel wire W (a direction from right to left in FIG. 1) is used as a reference direction. In particular, unless otherwise specified, "ahead" or "front" corresponds to "downstream", and "back" or "behind" corresponds to "upstream".

As illustrated in FIG. 1, a sheet production system 1 is a system for producing a rubber sheet A that includes a steel wire W as a core material. For example, the rubber sheet A is used to manufacture a truck/bus radial tire (TBR). The rubber sheet A includes a large number of steel wires W. For example, the number of steel wires W is in a range of 900 to 1,000. The steel wire W is a wire material also referred to as a steel cord. The sheet production system 1 includes a calender device 6. The calender device 6 rolls a raw material sheet A1 supplied from an upper side and a raw material sheet A2 supplied from a lower side while the large number of steel wires W are inserted between the raw material sheet A1 and the raw material sheet A2, thereby producing the rubber sheet A.

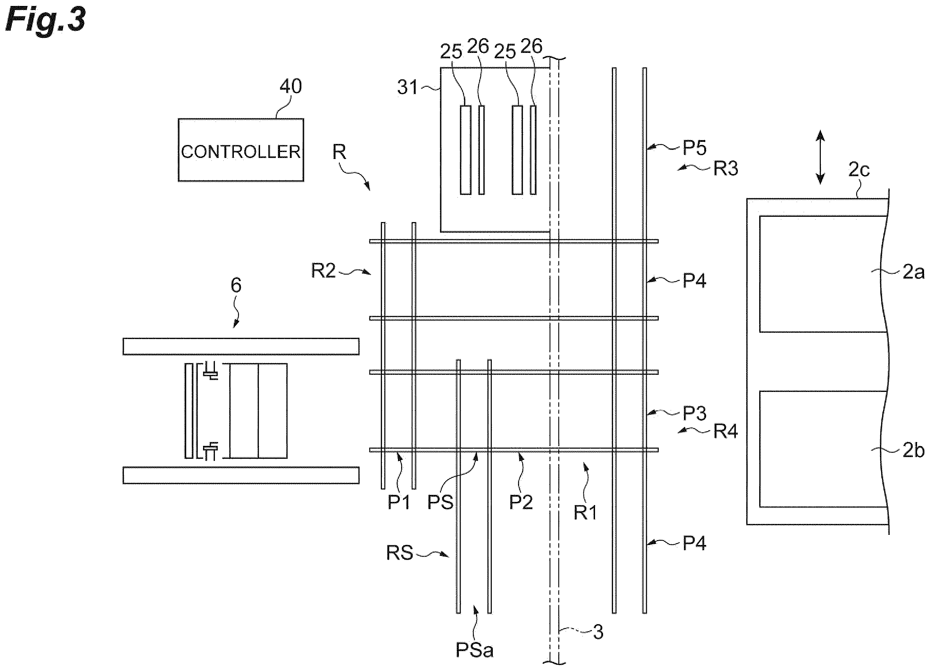

The sheet production system 1 includes a plurality of creel stands 2 that accommodate a large number of wire bobbins 5 (or wire reels) around which the steel wires W are wound. In the sheet production system 1, two creel stands 2 are provided (see first creel stand 2a and second creel stand 2b of FIG. 3). The two creel stands 2 are installed in a creel room 3 in which temperature, humidity, etc. are managed from a viewpoint of quality control for the steel wires W. Any one of the creel stands 2 is used to produce the rubber sheet A in the sheet production system 1. The creel stands 2 adjust tension of extracted steel wires W such that the tension is appropriate during use. The two creel stands 2 are installed on an elongated common base 2c. The creel stands 2 to be used are switched by sliding movement of the common base 2c. The two creel stands 2 are used one by one in response to replacement of the steel wires W described below. The number of creel stands 2 may correspond to three or more. A wire alignment portion 4 for aligning the large number of steel wires W is provided on a downstream side of the creel stands 2.

A wire replacement device 10 of the present embodiment is provided between the wire alignment portion 4 and the calender device 6. The wire replacement device 10 may semi-automatically perform an operation of replacing the steel wires W which has been mostly manually performed in a conventional scheme. For example, replacement of the steel wires W refers to switching the steel wires W when the steel wires W are terminated or when a type (lot, etc.) of the steel wires W is changed. The wire replacement device 10 greatly shortens time required for the operation of replacing the steel wires W when compared to a conventional wire replacement device by having a unique configuration.

The sheet production system 1 includes a cooling unit 7 that draws out the rubber sheet A from the calender device 6 and cools the rubber sheet A, an accumulator 8 in which a sheet is accumulated during replacement of a winding roll, and a winding roll portion 9. The winding roll portion 9 includes two winding rolls 9a and 9a for winding the rubber sheet A (only one winding roll 9a is illustrated in FIG. 1). When the winding roll 9a reaches a winding length, a winding position is switched from a first winding roll 9a to a second winding roll 9a or from the second winding roll 9a to the first winding roll 9a. The sheet production system 1 accumulates the rubber sheet A in the accumulator 8 without suspending production of the rubber sheet A during this switching. After switching of the winding roll 9a is completed, the sheet production system 1 winds the rubber sheet A accumulated in the accumulator 8 by increasing a winding speed.

In the sheet production system 1, the respective devices are provided on a substantially horizontal site in order of a creel stand 2, the wire alignment portion 4, the wire replacement device 10, the calender device 6, the cooling unit 7, the accumulator 8, and the winding roll portion 9 from an upstream side toward a downstream side. Tension applied to the steel wires W and the rubber sheet A is adjusted when several devices are controlled by a controller (not illustrated). The invention is not limited to a case in which all devices are disposed in a straight line. The respective devices may be disposed in the above-mentioned order as a conveyance direction of the steel wires W, and layout of the devices may be appropriately changed. For example, depending on the shape, etc. of the site, the conveyance direction of the steel wires W may be changed to either an "up-down direction" or a "left-right direction" in a certain part.

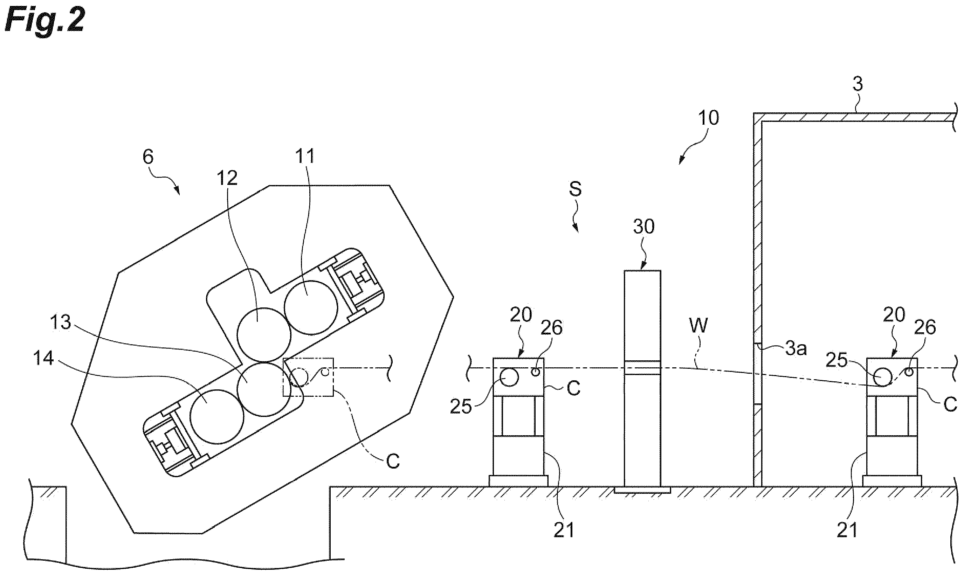

The calender device 6 will be described with reference to FIG. 2 and FIG. 3. The steel wires W supplied to the calender device 6 are drawn out of the creel room 3 through an opening 3a provided in the creel room 3. The calender device 6 includes four rolling-mill rolls having approximately the same diameter. The calender device 6 includes a first roll 11, a second roll 12, a third roll 13, and a fourth roll 14. The second roll 12 on an upper side and the third roll 13 on a lower side corresponding to rolling-mill rolls disposed at a center of the calender device 6 in a height direction are close to each other with a predetermined gap, and interpose the raw material sheets A1 and A2 and the steel wires W therebetween. The first roll 11 disposed in an upper part of the second roll 12 is close to the second roll 12 with a predetermined gap. The fourth roll 14 disposed in a lower part of the third roll 13 is close to the third roll 13 with a predetermined gap. Thicknesses of the raw material sheets A1 and A2 are kept constant.

The wire replacement device 10 will be described with reference to FIG. 2 to FIG. 4. The wire replacement device 10 is installed in a space S provided between the wire alignment portion 4 in the creel room 3 and the calender device 6. The wire replacement device 10 includes a plurality of carriages 20. For example, the wire replacement device 10 includes two carriages 20 movable in the space S. The number of carriages 20 may be three or more. The number of carriages 20 may be the same as the number of creel stands 2 or larger than the number of creel stands 2.

Each of the carriages 20 includes a main carriage body 21 movable in the space S and a cartridge (roll holding portion) C installed or placed on the main carriage body 21. The main carriage body 21 (that is, the carriage 20) is configured to be movable along a predetermined moving path R in the space S. The main carriage body 21 moves along the moving path R by a known conveying device. For example, the conveying device may correspond to a chain type conveying device or a conveying device using a motor provided on a floor side. The main carriage body 21 may correspond to a self-propelled type.

For example, the cartridge C includes a frame body made of steel, and holds the press roll 25 and the comb roll 26 inside the frame body. The press roll 25 and the comb roll 26 are rotatably supported with respect to the frame body of the cartridge C. The press roll 25 and the comb roll 26 may be detachable from the frame body or may not be removable from the frame body. This point may be changed according to a specification of a roll stocker 31 described below.

A diameter of the press roll 25 having a cylindrical shape is larger than a diameter of the comb roll 26 having a cylindrical shape. A large number of annular grooves corresponding to the number of steel wires W are provided on a circumferential surface of the comb roll 26. The grooves of the comb roll 26 accommodate most of the steel wires W in a radial direction. A large number of annular grooves corresponding to the number of steel wires W are provided on a circumferential surface of the press roll 25. The grooves of the press roll 25 accommodate about a half of the steel wires W in the radial direction.

The comb roll 26 and the press roll 25 align the larger number of steel wires W in a row when the steel wires W are accommodated in the respective grooves. More specifically, during production of the rubber sheet A, the press roll 25 and the comb roll 26 are incorporated in the calender device 6. A center position of the comb roll 26 is slightly higher than a center position of the press roll 25. The comb roll 26 is disposed farther from the third roll 13 than the press roll 25. In other words, the circumferential surface of the press roll 25 faces the circumferential surface of the comb roll 26. The press roll 25 is disposed obliquely below the comb roll 26.

The press roll 25 approaches the third roll 13 with a set gap (a gap corresponding to the thickness of the raw material sheet A2), and presses the steel wires W protruding in a semicircular shape into the raw material sheet A2. The steel wires W are passed to an upper surface side of the comb roll 26, and are further passed to a lower surface side of the press roll 25. The steel wires W are guided by the comb roll 26 and the press roll 25. The steel wires W, which protrude in a semicircular shape from the press roll 25 while being aligned in a row, are transferred onto the raw material sheet A2 on a lower side on the third roll 13. Thereafter, the steel wires W are interposed by the raw material sheet A1 and the raw material sheet A2 between the second roll 12 and the third roll 13. In this way, the raw material sheets A1 and A2 are topped on the steel wires W, and the rubber sheet A is produced.

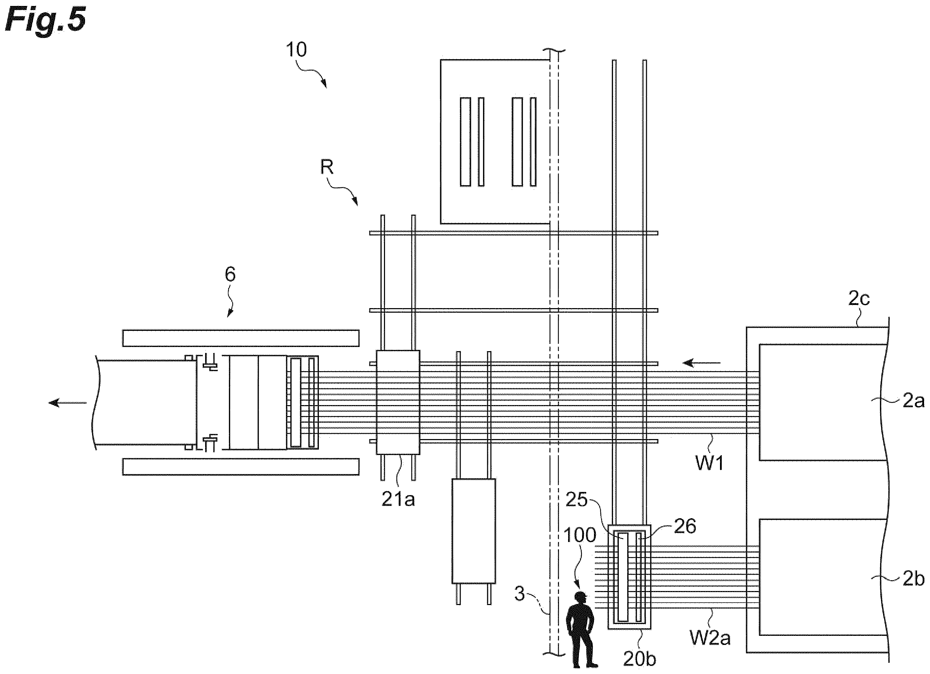

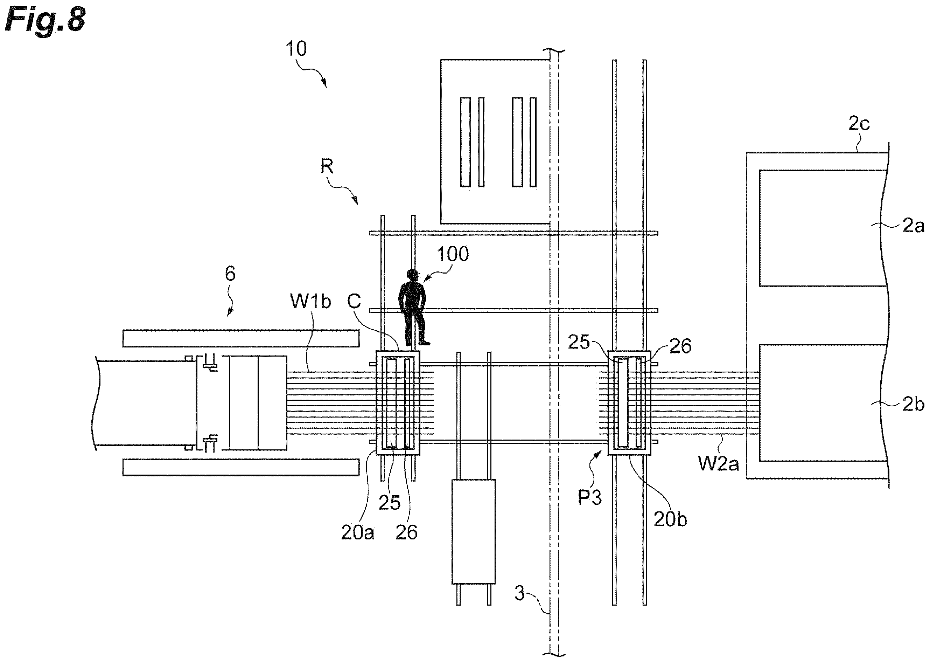

The press roll 25 and the comb roll 26 in the cartridge C are held in substantially the same positional relation as that of the press roll 25 and the comb roll 26 in use described above. At least a front surface facing a downstream side, a back surface facing an upstream side, and an upper surface are open in the cartridge C. By opening of the front surface and the back surface, the steel wires W may be passed without hindrance. By opening of the front surface, the back surface, and the upper surface, the fitting operation of the steel wires W is easy. According to this configuration, an operator 100 may easily access the comb roll 26 and the press roll 25 in the cartridge C in a state in which the cartridge C is installed or placed on the main carriage body 21 (see FIG. 5 and FIG. 8).

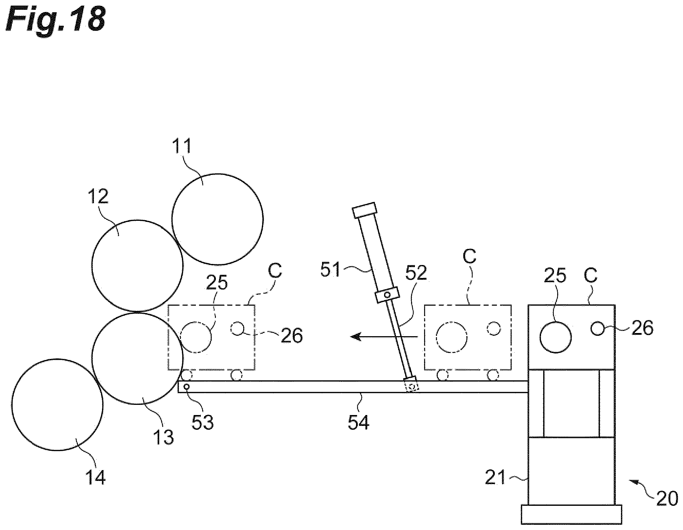

Further, the cartridge C is detachably attached to the main carriage body 21. For example, the cartridge C can be conveyed by the cartridge conveying device illustrated in FIG. 18. Specifically, the cartridge C may be detached from the main carriage body 21 and conveyed to a position at which the press roll 25 comes into contact with the third roll 13. The cartridge C may be detached from the calender device 6 and conveyed to the main carriage body 21.

A fixing device (not illustrated) that fixes the cartridge C is provided in the calender device 6. Further, a pressing device (not illustrated) that presses the press roll 25 to the third roll 13 is provided in the calender device 6. A diameter of the third roll 13 is small at end portions in a width direction (end portions supported by a main body of the device). The frame body of the cartridge C has a shape and a size which do not interfere with the third roll 13 even when the frame body is close to the third roll 13.

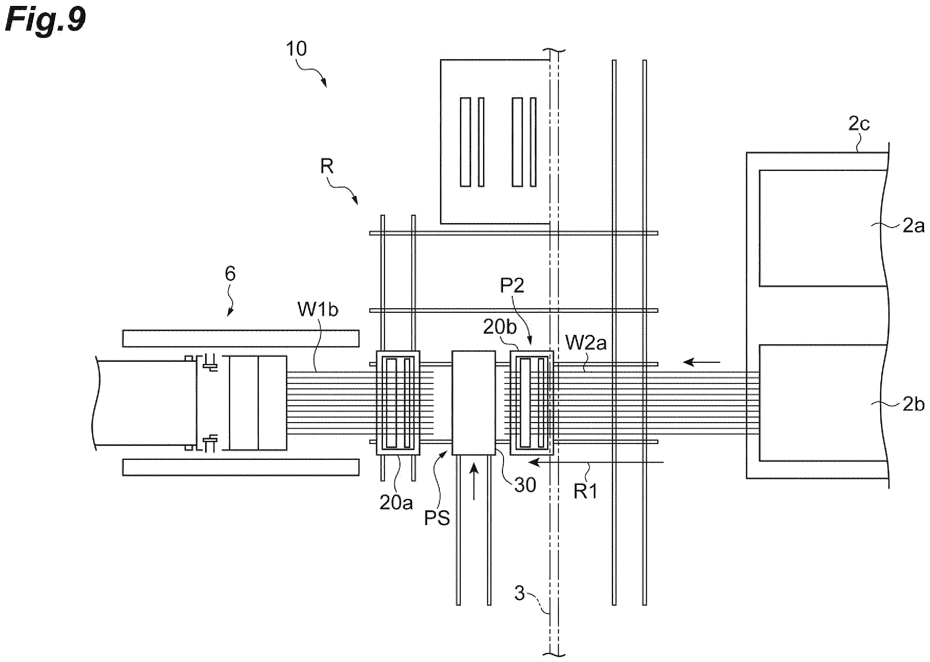

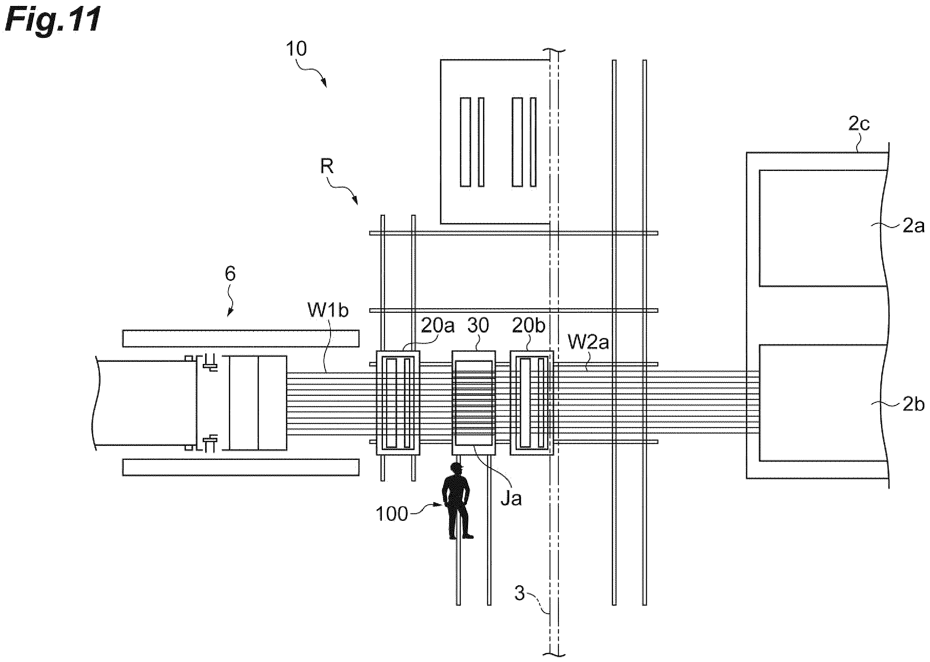

The wire replacement device 10 includes a splicer 30 that can join the steel wires W together. For example, the splicer 30 is a C-type splicer. The splicer 30 joins a back end portion W1b of a preceding first steel wire W1 passing through the calender device 6 to a front end portion W2a of a subsequent second steel wire W2 extending from the creel stand 2 (see FIG. 9 to FIG. 12). More specifically, the splicer 30 joins, using a rubber sheet Ja for joining (see FIG. 11), the back end portion W1b of the first steel wire W1 to the front end portion W2a of the second steel wire W2 through the rubber sheet Ja for joining. The splicer 30 is provided in the space S and is configured to be able to reciprocate along a linear splicer moving path RS. The splicer 30 is moved along the splicer moving path RS by a known conveying device. For example, the conveying device may correspond to a chain type conveying device or a conveying device using a motor provided on a floor side. The splicer 30 may correspond to a self-propelled type.

The wire replacement device 10 further includes a controller 40 that controls movement of the main carriage body 21 (that is, the carriage 20) (see FIG. 3). For example, the controller 40 is a computer including hardware such as a central processing unit (CPU), a read only memory (ROM), a random access memory (RAM), etc. and software such as a program stored in the ROM.

The controller 40 is connected to a conveying device of each carriage 20 and a conveying device of the splicer 30 such that communication is allowed therebetween. The controller 40 moves the carriage 20 and the splicer 30 by transmitting control signals to these conveying devices. The controller 40 may communicate with a controller of the entire sheet production system 1. The controller 40 may detect sliding motion of the common base 2c or operation or suspension of the calender device 6. The controller 40 may input an instruction, an operation condition, etc. to each device by being operated by the operator 100. In drawings other than FIG. 3, illustration of the controller 40 is omitted.

Next, a description will be given of the moving path R of the carriage 20 and the splicer 30 with reference to FIG. 3. As illustrated in FIG. 3, the moving path R is formed by a plurality of rails. For example, each path is formed by two rails for guiding the main carriage body 21.

The moving path R includes a forward path R1 extending between the creel stand 2 in use and the calender device 6. More specifically, the forward path R1 extends from a third position P3 located in front of the creel stand 2 in use to a first position P1 close to the calender device 6. The forward path R1 passes through a joining position PS at which the splicer 30 may stop and a second position P2 at which the carriage 20 may stop between the third position P3 and the first position P1. The first position P1 is a position on the calender device 6 side with respect to the joining position PS. The second position P2 is a position on an opposite side from the calender device 6 with respect to the joining position PS. In other words, the joining position PS is disposed between the first position P1 and the second position P2. In this way, the carriage 20 is configured to be able to pass through the joining position PS.

Meanwhile, the splicer moving path RS extends from the joining position PS to an outside of the forward path R1 of the carriage 20 to be orthogonal to the forward path R1. In this way, the splicer 30 is configured to be movable to the joining position PS and to a standby position PSa separated from the joining position PS.

The moving path R of the carriage 20 includes a backward path R2 extending between the calender device 6 and the creel stand 2 on standby. The backward path R2 extends from the first position P1 close to the calender device 6 to the fourth position P4 located in front of the creel stand 2 on standby.

As illustrated in FIG. 3, the roll stocker 31 accessible from an inside of the creel room 3 is provided in the creel room 3. A plurality of (for example, 10 sets of) press rolls 25 and comb rolls 26 are stocked in the roll stocker 31. These press rolls 25 and comb rolls 26 have grooves corresponding to the type (lot, etc.) of the steel wires W. For example, when the type (lot, etc.) of the steel wires W is changed, the press rolls 25 and the comb rolls 26 need to be newly attached to the calender device 6. Each of the press rolls 25 and the comb rolls 26 may be stocked as a single body or may be stocked while being held by the above-described cartridge C.

The moving path R of the carriage 20 includes a roll exchange path R3 extending between the creel stand 2 on standby and the roll stocker 31. The roll exchange path R3 extends from the fourth position P4 located in front of the creel stand 2 on standby to a fifth position P5 ahead of the roll stocker 31. "Ahead" of the roll stocker 31 mentioned herein refers to a side accessible to the inside of the roll stocker 31 (right side in FIG. 3) regardless of the conveyance direction of the steel wires W.

The moving path R includes a wire preparation path R4 extending in front of the two creel stands 2 (the first and second creel stands 2a and 2b). The wire preparation path R4 extends by a predetermined distance around the third position P3 located in front of the creel stand 2 in use at both sides of the common base 2c in a sliding direction. This predetermined distance is the same as or longer than a slidable distance of the common base 2c. The wire preparation path R4 passes through the fourth position P4 in front of the second creel stand 2b which is on standby when the first creel stand 2a is in use, the third position P3, and the fourth position P4 in front of the first creel stand 2a which is on standby when the second creel stand 2b is in use.

The forward path R1, the backward path R2, and the wire preparation path R4 form a circling path. The roll exchange path R3 branches from this circling path. In this way, the moving path R of the carriage 20 includes the circling path passing through the first position P1 and the second position P2 in front of and behind the joining position PS. The roll exchange path R3 may be provided in the circling path. The wire preparation path R4 may be provided at a position branching from the circling path.

By providing the above-described moving path R, the carriage 20 is configured to be movable to the first position P1 on the calender device 6 side of the joining position PS and movable to the second position P2 on the creel stand 2 side of the joining position PS.

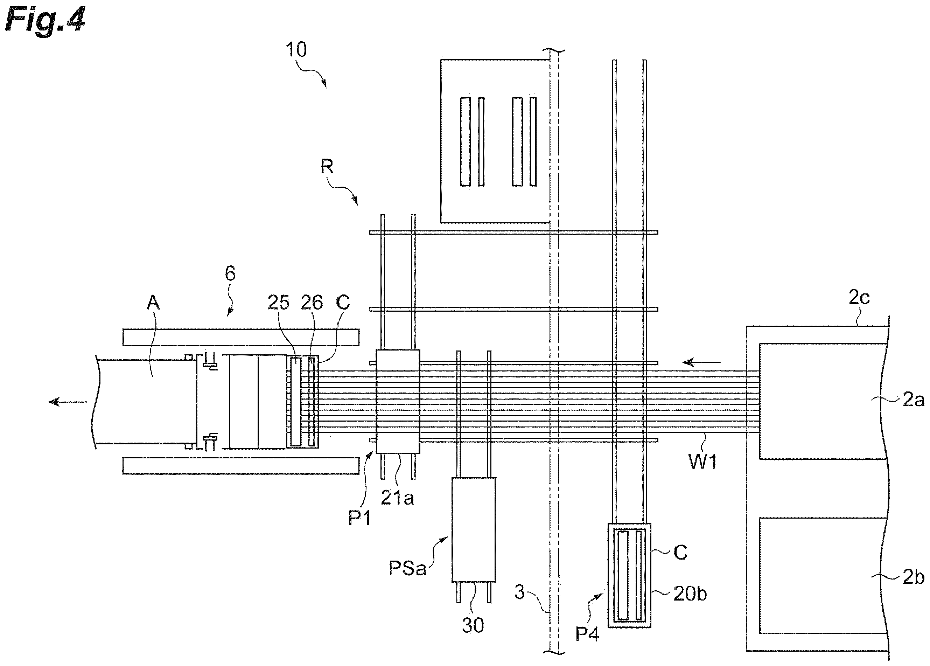

Next, a description will be given of a wire replacement method using the wire replacement device 10 with reference to FIG. 4 and subsequent figures. In description below, in order to facilitate understanding, the carriage 20 is distinguished into a first carriage 20a and a second carriage 20b, and the main carriage body 21 is distinguished into a first main carriage body 21a and a second main carriage body 21b.

FIG. 4 illustrates a process during production of the rubber sheet A. As illustrated in FIG. 4, the first steel wire W1 is drawn out from the first creel stand 2a, and the rubber sheet A is generated by the calender device 6. The cartridge C of the first carriage 20a is attached to the calender device 6. The press roll 25 and the comb roll 26 held by the cartridge C have specifications corresponding to the first steel wire W1.

The remaining first main carriage body 21a remains disposed at the first position P1, and is located below the first steel wire W1 that passes. The splicer 30 is located at the standby position PSa. The second carriage 20b (second wire carriage) is located at the fourth position P4 in front of the second creel stand 2b. The press roll 25 and the comb roll 26 having specifications corresponding to the subsequent second steel wire W2 are held in the cartridge C of the second carriage 20b.

Subsequently, as illustrated in FIG. 5, the front end portion W2a of the second steel wire W2 is drawn out from the second creel stand 2b. The operator 100 fits the front end portion W2a to the comb roll 26 and the press roll 25. In this way, the front end portion W2a is aligned in advance. The front end portion W2a is pressed forward with respect to the press roll 25. In this way, an aligned state of the front end portion W2a (second wire aligned state) is maintained. During this time, the calender device 6 continues to operate, and thus an operation rate of the calender device 6 does not drop.

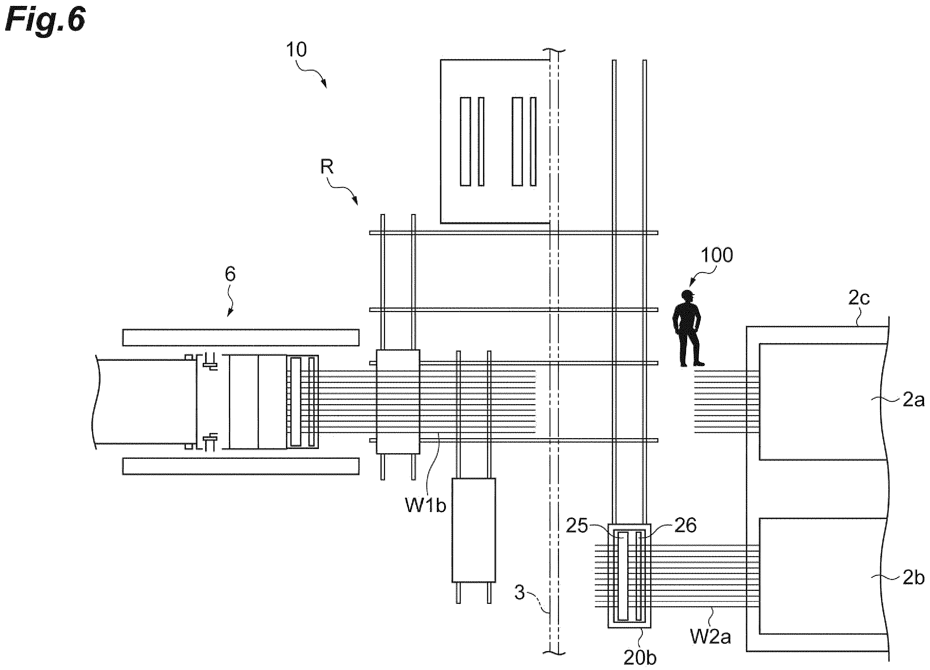

Further, as illustrated in FIG. 6, for example, when there is a wire likely to be terminated among a plurality of first steel wires W1 drawn out from the first creel stand 2a, the operator terminates production using the first steel wires W1. Specifically, the operator 100 stops the calender device 6, and cuts the first steel wire W1. The operator 100 winds the remaining first steel wire W1. The back end portion W1b of the first steel wire W1 exceeds the joining position PS.

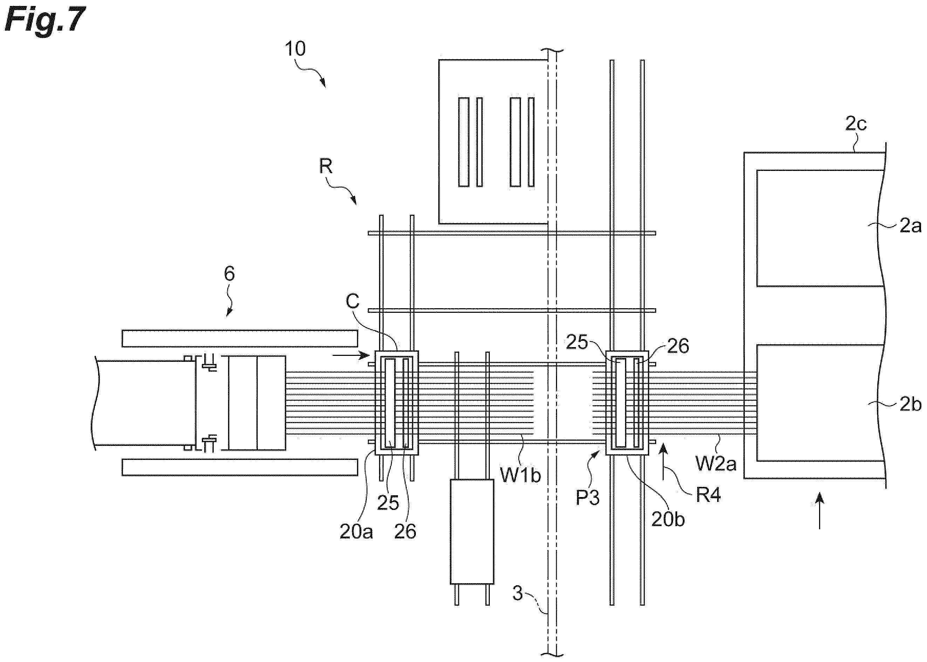

Subsequently, as illustrated in FIG. 7, the cartridge C is taken out from the calender device 6, and the press roll 25 and the comb roll 26 are removed from the calender device 6 (roll removal process). The cartridge C is attached to the first main carriage body 21a which has been on standby at the first position P1. In this way, the first position P1 is a delivery position of the cartridge C. The second carriage 20b moves from the fourth position P4 to the third position P3. This movement is controlled by the controller 40, and is performed in synchronization with sliding movement of the common base 2c.

Subsequently, as illustrated in FIG. 8, the operator 100 temporarily removes the back end portion W1b passing under the press roll 25, and rearranges the back end portion W1b such that the back end portion W1b passes over the press roll 25 and the comb roll 26.

Subsequently, as illustrated in FIG. 9, the second carriage 20b is advanced to the second position P2 by the conveying device (second wire preparation process). In this instance, the press roll 25 and the comb roll 26 in the above-described second wire aligned state are attached to the cartridge C of the second carriage 20b. In addition, the splicer 30 is moved to the joining position PS by the conveying device such as a motor, an actuator, etc. In this way, the first carriage 20a holding the back end portion W1b and the second carriage 20b aligning and holding the front end portion W2a are disposed at both sides of the splicer 30.

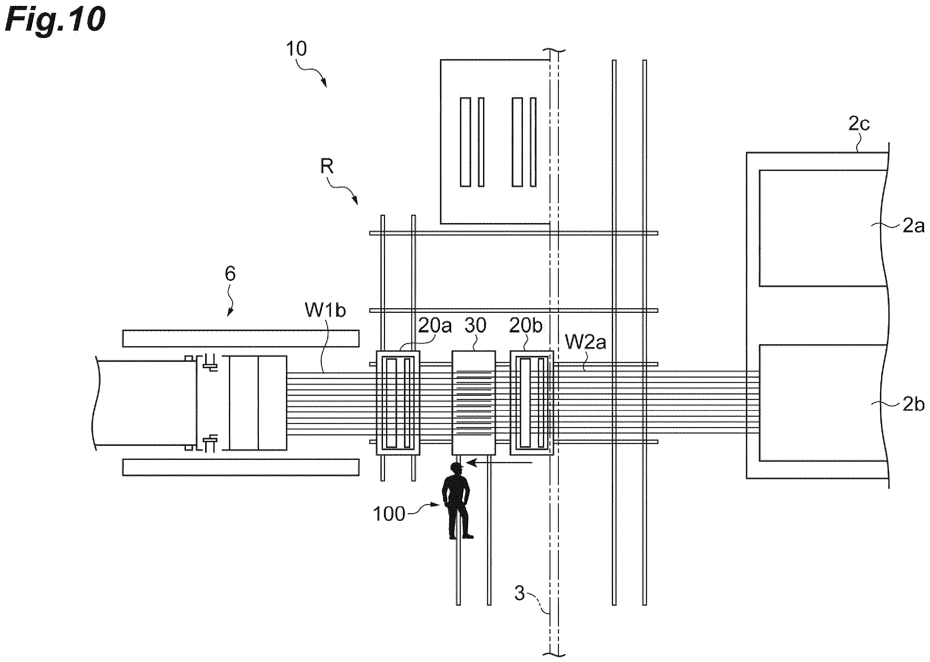

Subsequently, as illustrated in FIG. 10, the operator 100 sets a joining rubber sheet Ja (see FIG. 11) in the splicer 30, and sets the back end portion W1b and the front end portion W2a in the splicer 30. Then, as illustrated in FIG. 11, the operator 100 joins the back end portion W1b and the front end portion W2a together by operating the splicer 30 (joining process).

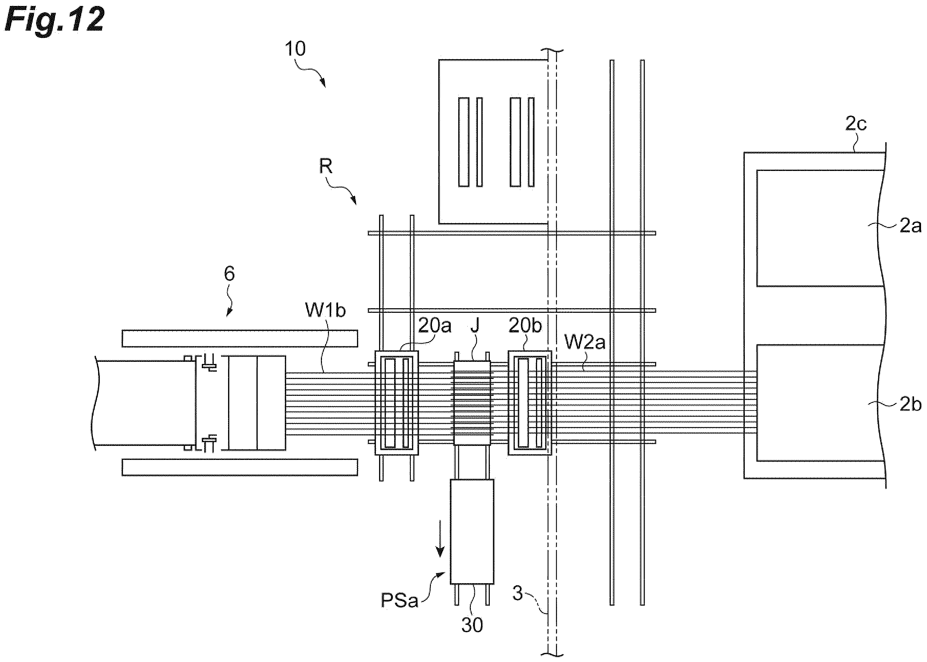

As illustrated in FIG. 12, a joint J is formed between the back end portion W1b and the front end portion W2a. Thereafter, the splicer 30 is moved to the standby position PSa by the conveying device such as the motor, the actuator, etc (splicer retreating process).

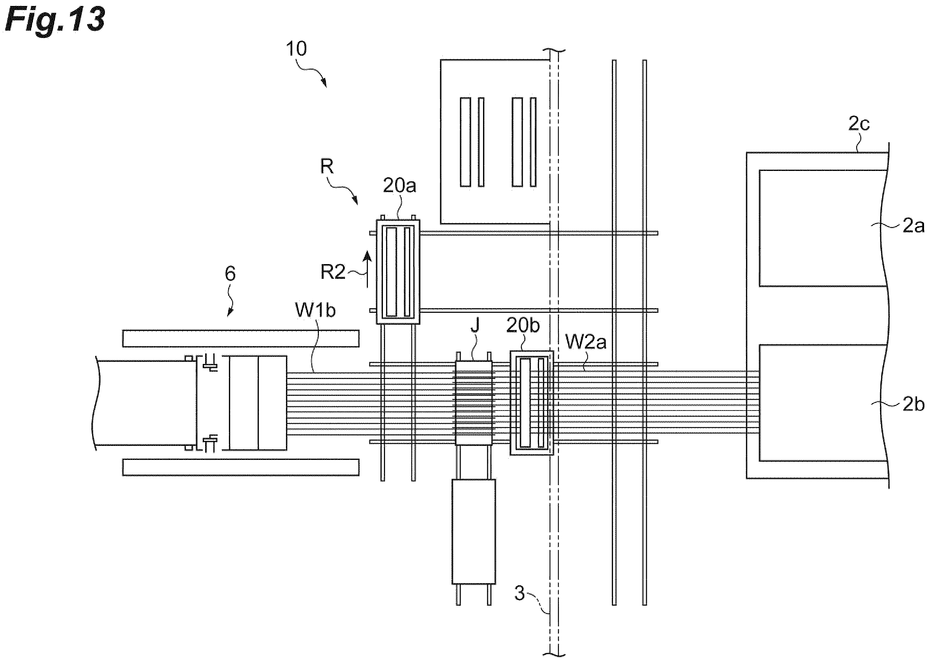

Subsequently, as illustrated in FIG. 13, the first carriage 20a is moved from the first position P1 by the conveying device (carriage retreating process). In this way, the first carriage 20a is removed from a production line through the backward path R2.

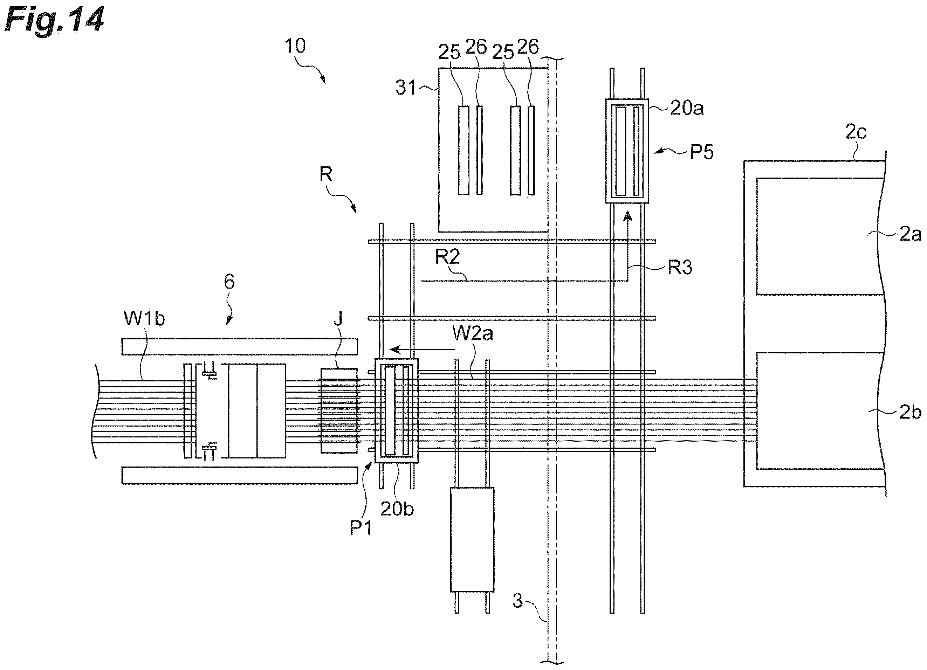

Subsequently, as illustrated in FIG. 14, the second carriage 20b is moved to the first position P1 together with the front end portion W2a by the conveying device (carriage advancing process). In this instance, the press roll 25 and the comb roll 26 in the above-described second wire aligned state are attached to the cartridge C of the second carriage 20b. In the carriage advancing process, the second carriage 20b passes through the joining position PS.

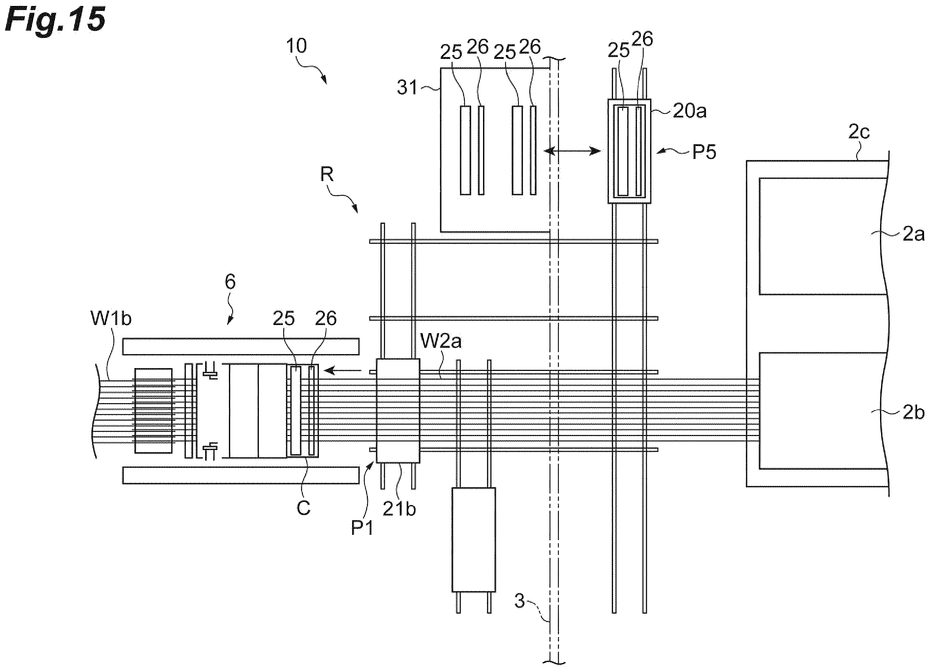

Subsequently, as illustrated in FIG. 15, the cartridge C is detached from the second carriage 20b and set in the calender device 6. That is, the press roll 25 and the comb roll 26 are attached to the calender device 6 (roll attaching process). In this instance, the cartridge C is fixed and the press roll 25 is pressed against the third roll 13 using the above-described fixing device or pressing device. In this way, the first position P1 is a delivery position of the cartridge C. Meanwhile, the first carriage 20a is moved to the fifth position P5 using the conveying device, and replaced with the press roll 25 and the comb roll 26 suitable for subsequent production (roll exchange process). Here, the press roll 25 and the comb roll 26 are taken in and out. A new press roll 25 and a new comb roll 26 are held in the cartridge C.

In the above-described roll removal process (see FIG. 7) and the roll attaching process, for example, the cartridge conveying device illustrated in FIG. 18 is used. The cartridge conveying device includes a pair of rails 54 fixed to the calender device 6 through a shaft 53, rods 52 connected to each distal end side of the rails 54, and a cylinder 51 that retreats the rods 52. The rails 54 are stored when the rods 52 retreats, and the rails 54 are bridged between a portion around the third roll 13 and the carriage 20 located at the first position P1 when the rods 52 advances. For example, four wheels are provided in the cartridge C. A delivery device that delivers the cartridge C onto the rails 54 may be included on each of the third roll 13 side and the carriage 20 side.

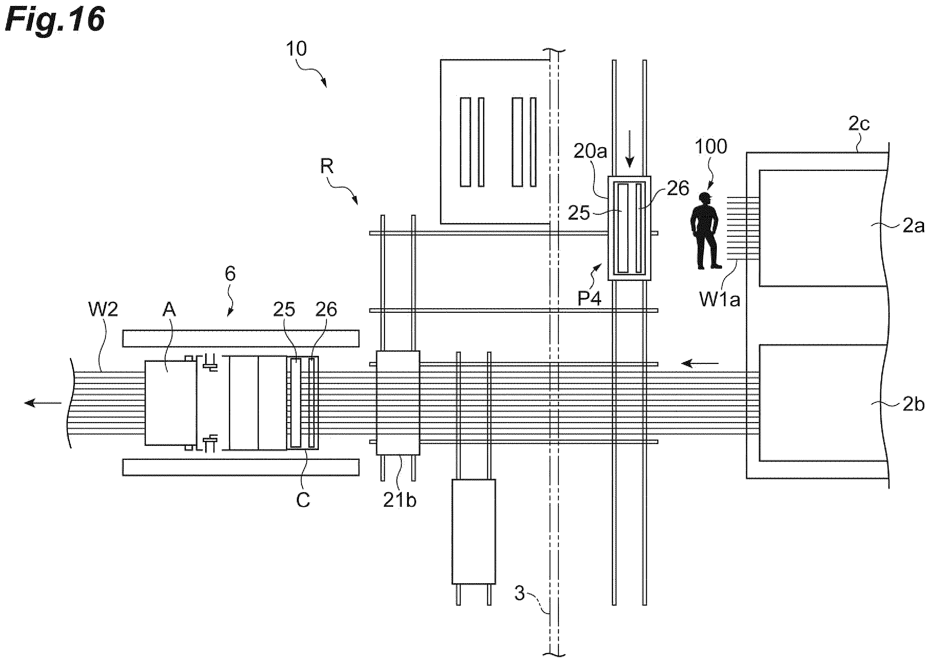

Returning to FIG. 16, generation of the rubber sheet A by the calender device 6 is resumed. The first carriage 20a is moved to the fourth position P4 in front of the first creel stand 2a by the conveying device. While generation of the rubber sheet A using the second steel wire W2 continues, the operator sets a large number of wire bobbins 5 on the first creel stand 2a, and draws out the front end portion W1a of the first steel wire W1.

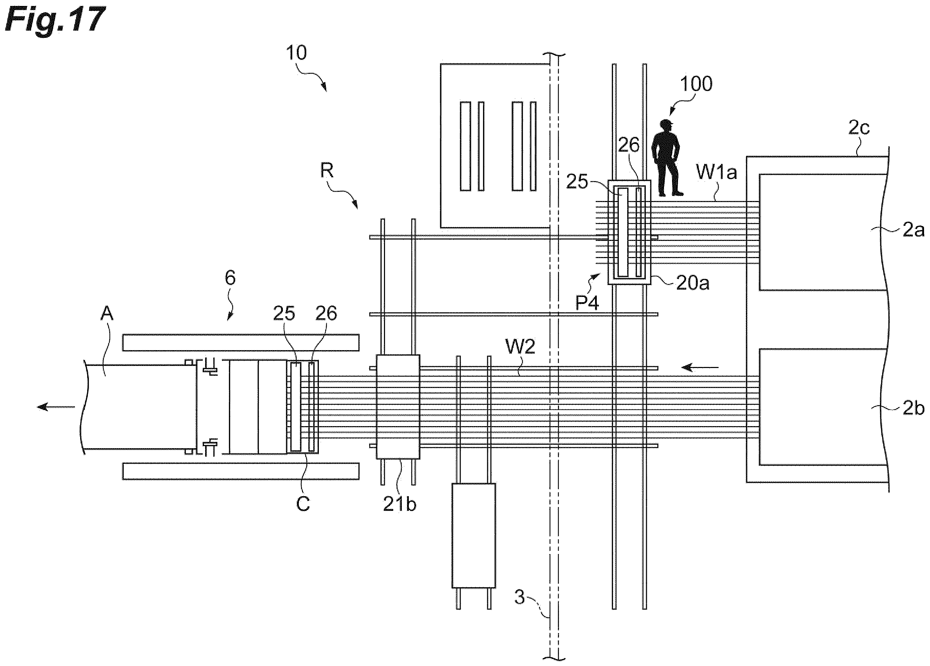

Then, as illustrated in FIG. 17, the operator 100 fits the front end portion W1a to the comb roll 26 and the press roll 25. In this way, the front end portion W1a is aligned in advance. The front end portion W1a is pressed in front of the press roll 25. In this way, the aligned state of the front end portion W1a is maintained. During this time, since the calender device 6 continues to operate, an operation rate of the calender device 6 does not drop. Thereafter, the same processes as the above-described processes are repeated.

According to the wire replacement device 10 and the wire replacement method of the present embodiment described above, when the steel wires W are replaced, the back end portion W1b of the first steel wire W1 and the front end portion W2a of the second steel wire W2 are joined together by the splicer 30 (joining process). Since the carriage 20 is movable, the front end portion W2a can be aligned in the press roll 25 and the comb roll 26 attached to the second carriage 20b before the joining process, that is, while the first steel wire W1 is used for production of the sheet (second wire preparation process). Since the press roll 25 and the comb roll 26 are detachable from the second carriage 20b, the calender device 6 can be operated to resume production of the rubber sheet A by attaching the press roll 25 and the comb roll 26 in which the front end portion W2a is aligned to the calender device 6 (roll attaching process). In this way, by aligning the front end portion W2a of the second steel wire W2 in advance during production of the rubber sheet A using the first steel wire W1, a process (labor) of aligning the second steel wire W2 after the calender device 6 is stopped is omitted. It is possible to shorten a stop time of the calender device 6 during the entire process. Therefore, it is possible to improve the operation rate of the calender device 6. For example, a wire replacement operation, which took about 2 hours in a conventional wire replacement device, can be performed in about 20 minutes. As the number of wire replacements per day increases, the operation rate is further improved.

By removing the cartridge C from the carriage 20 and attached to the calender device 6, the press roll 25 and the comb roll 26 can be moved and exchanged. In this way, handling of the press roll 25 and the comb roll 26 is facilitated.

After joining is performed using the splicer 30, the second carriage 20b can be moved to the first position P1 on the calender device 6 side in a state in which the front end portion W2a of the second steel wire W2 is aligned. Therefore, the second carriage 20b can be located closer to the calender device 6, and the press roll 25 and the comb roll 26 are easily transferred.

Since the splicer 30 can move to the standby position PSa, the moving paths of the carriage 20 and the splicer 30 can be made compact without interfering with the carriage 20 and the splicer 30.

Since the carriage 20 passes through the joining position PS, the moving path of the carriage can be shortened.

By moving of the carriage 20 along the circling path of the moving path R, the press roll 25 and the comb roll 26 can be efficiently conveyed as the steel wires W are switched.

By moving the carriage 20 to the fourth position P4, the carriage 20 is used for the alignment operation of the steel wires W while the creel stand 2 is on standby. In addition, by moving the carriage 20 to the third position P3, the carriage 20 is used for an operation of supplying the steel wires W while the creel stand 2 is used.

By moving the carriage 20 to a position in front of the roll stocker 31, exchange of the press roll 25 and the comb roll 26 is facilitated.

By providing the controller 40, movement of the carriage 20 can be controlled, and a semi-automatic operation of the wire replacement device 10 is allowed.

The embodiment of the invention has been described above. However, the invention is not limited to the above-described embodiment. For example, the carriage 20 may not move on the rails. The rails may be omitted. The carriage 20 may store a moving path therein, and may move in a self-propelled manner.

All modes may be considered as the moving path of the carriage 20. The moving path may be changed according to the number of creel stands 2, arrangement of the roll stocker 31, etc.

The invention is not limited to a case in which the cartridge C is transferred, and only may be transferred. When the carriage 20 is positioned at a position other than the first position P1, the press roll 25 and the comb roll 26 may be transferred. For example, the carriage 20 is positioned at the second position P2, the press roll 25 and the comb roll 26 may be transferred. In this case, the splicer 30 needs to be retracted.

When the carriage 20 to the first position P1, the splicer 30 may not be retracted, and the carriage 20 may move by detouring around the splicer 30. The carriage 20 may not move to the front of the roll stocker 31, and the press roll 25 and the comb roll 26 may be conveyed from the roll stocker 31.

The invention may be applied to insertion of a textile cord.

### Industrial Applicability

A wire replacement device according to some aspects of this disclosure may improve an operation rate of a calender device.

### Reference Signs List

- 1:: sheet production system
- 2:: creel stand
- 2a:: first creel stand
- 2b:: second creel stand
- 6:: calender device
- 10:: wire replacement device
- 20:: carriage
- 20a:: first carriage
- 20b:: second carriage
- 21:: main carriage body
- 21a:: first main carriage body
- 21b:: second main carriage body
- 25:: press roll
- 26:: comb roll
- 30:: splicer
- 31:: roll stocker
- 40:: controller
- C:: cartridge (roll holding portion)
- P1:: first position
- P2:: second position
- P3:: third position
- P4:: fourth position
- P5:: fifth position
- PS:: joining position
- R:: moving path
- R1:: forward path
- R2:: backward path
- R3:: roll exchange path
- R4:: wire preparation path
- RS:: splicer moving path
- S:: space
- W:: steel wire (wire)
- W1:: first steel wire
- W1a:: front end portion
- W1b:: back end portion
- W2:: second steel wire
- W2a:: front end portion

## Claims

1. A wire replacement device (10) configured to be applied to a sheet production system (1) in which two or more creel stands (2) are used, each of the creel stands (2) being allowed to accommodate a plurality of wires (W),
**characterized in that** the wire replacement device (10) comprises:
a plurality of carriages (20) which is movable in a space (S) provided between the creel stands (2) and a calender device (6) and to which one roll or a plurality of rolls (25, 26) for aligning the wires (W) supplied to the calender device (6) is detachably attached; and
a splicer (30) configured to join back end portions (W1b) of a plurality of preceding first wires (W1) passing through the calender device (6) to front end portions (W2a) of a plurality of subsequent second wires (W2) extending from the creel stands (2) at a joining position (PS) between the calender device (6) and the creel stands (2),
wherein each of the carriages (20) is configured to be movable to a first position (P1) on a side of the calender device (6) with respect to the joining position (PS) at which the splicer (30) is located and movable to a second position (P2) on an opposite side from the calender device (6) with respect to the joining position (PS),
wherein the splicer (30) is configured to be movable to the joining position (PS) and to a standby position (PSa) separated from the joining position (PS), and
the wire replacement device (10) further comprising a moving path (R) of the carriages (20) including a circling path passing through the first position (P1) and the second position (P2).

2. The wire replacement device according to claim 1, further comprising
a roll holding portion (C) detachably attached to each of the carriages (20a, 20b) to hold the one roll or the plurality of rolls (25, 26).

3. The wire replacement device according to claim 1 or 2, wherein each of the carriages (20a, 20b) is configured to be allowed to pass through the joining position (PS) between the first position (P1) and the second position (P2).

4. The wire replacement device according to claim 1, 2 or 3, wherein the moving path (R) includes a wire preparation path (R4) provided in the circling path or at a position branching from the circling path and passes through a third position (P3) in front of one of the creel stands (2) in use and a fourth position (P4) in front of another one of the creel stands (2) on standby.

5. The wire replacement device according to any one of claims 1 to 4, wherein the moving path (R) includes a roll exchange path (R) provided in the circling path or at a position branching from the circling path and passes in front of a roll stocker (31) in which the one roll or the plurality of rolls (25, 26) for exchange is stocked.

6. The wire replacement device according to any one of claims 1 to 5, further comprising
a controller (40) that controls movement of the carriages (20).

7. A wire replacement method applied to a sheet production system (1) in which two or more creel stands (2) are used one by one for production of a sheet (A), each of the creel stands (2) being allowed to accommodate a plurality of wires (W),
**characterized in that**
the wire replacement method uses a plurality of carriages (20) which is movable in a space (S) provided between the creel stands (2) and a calender device (6) and to which one roll or a plurality of rolls (25, 26) for aligning the wires (W) supplied to the calender device (6) is detachably attached, and
a splicer (30) that joins back end portions (W1b) of a plurality of preceding first wires (W1) passing through the calender device (6) to front end portions (W2a) of a plurality of subsequent second wires (W2) extending from the creel stands (2) at a joining position (PS) between the calender device (6) and the creel stands (2) in use, and
the wire replacement method comprises:
a second wire preparation process of positioning a second wire carriage (20b) among the carriage (20) to which the rolls (25, 26) in a second wire aligned state is attached at a second position (P2) on an opposite side from the calender device (6) with respect to the joining position (PS), the front end portions (W2a) of the second wires (W2) being aligned in the second wire aligned state;
a joining process of joining the back end portions (W1b) of the first wires (W1) and the front end portions (W2a) of the second wires (W2) together using the splicer (30);
a roll attaching process of removing the rolls (25, 26) from the second wire carriage (20b) to which the rolls (25, 26) in the second wire aligned state are attached and attaching the removed rolls (25, 26) to the calender device (6);
a carriage advancing process of moving the second wire carriage (20b) to which the rolls in the second wire aligned state are attached to a first position (P1) on a side of the calender device (6) with respect to the joining position (PS), the carriage advancing process being performed after the joining process and before the roll attaching process;
a splicer retreating process of moving the splicer (30) to a standby position separated from the joining position (PS), the splicer retreating process being performed after the joining process;
a roll removal process of removing the rolls (25, 26) from the calender device (6) and attaching the removed rolls (25, 26) to a first wire carriage (20a) located at the first position (P1), the roll removal process being performed before the joining process; and
a carriage retreating process of moving the first wire carriage (20a) from the first position (P1), the carriage retreating process being performed after the joining process and before the carriage advancing process.

8. The wire replacement method according to claim 7,
wherein a roll holding portion (C) detachably attached to each of the carriages (20a, 20b) to hold the one roll or the plurality of rolls (25, 26) is used, and
the roll holding portion (C) is moved from the second wire carriage (20b) to the calender device (6) and the rolls in the second wire aligned state are attached to the calender device (6) in the roll attaching process.

9. The wire replacement method according to claim 7 or 8, wherein the second wire carriage (20b) moves to the first position (P1) by passing through the joining position (PS) in the carriage advancing process.

10. The wire replacement method according to claim 7, 8 or 9, further comprising
a roll exchange process of moving the first wire carriage (20a) to a position in front of a roll stocker (31) in which the one roll or the plurality of rolls for exchange is stocked, the roll exchange process being performed after the carriage retreating process.

## Patentansprüche

1. Drahtwechselvorrichtung (10), die dafür konfiguriert ist, auf ein Plattenherstellungssystem (1) angewandt zu werden, in dem zwei oder mehr Spulengatterständer (2) verwendet werden, wobei jeder von den Spulengatterständern (2) eine Vielzahl von Drähten (W) aufnehmen kann, **dadurch gekennzeichnet, dass** die Drahtwechselvorrichtung (10) Folgendes umfasst:
eine Vielzahl von Wagen (20), die in einem Raum (S) bewegbar sind, der zwischen den Spulengatterständern (2) und einer Kalandervorrichtung (6) vorgesehen ist, und an denen eine Rolle oder eine Vielzahl von Rollen (25, 26) zum Ausrichten der Drähte (W), die der Kalandervorrichtung (6) zugeführt werden, lösbar angebracht ist/sind; und
ein Spleißgerät (30), das dafür konfiguriert ist, hintere Endabschnitte (W1b) einer Vielzahl von vorausgehenden ersten Drähten (W1), die durch die Kalandervorrichtung (6) hindurch gehen, mit vorderen Endabschnitten (W2a) einer Vielzahl von nachfolgenden zweiten Drähten (W2), die sich von den Spulengatterständern (2) erstrecken, an einer Verbindungsposition (PS) zwischen der Kalandervorrichtung (6) und den Spulengatterständern (2) zu verbinden,
wobei jeder der Wagen (20) dafür konfiguriert ist, zu einer ersten Position (P1) auf einer Seite der Kalandervorrichtung (6) in Bezug auf die Verbindungsposition (PS), an der sich das Spleißgerät (30) befindet, bewegbar zu sein und zu einer zweiten Position (P2) auf einer entgegengesetzten Seite von der Kalandervorrichtung (6) in Bezug auf die Verbindungsposition (PS) bewegbar zu sein,
wobei das Spleißgerät (30) dafür konfiguriert ist, zu der Verbindungsposition (PS) und einer Bereitschaftsposition (PSa), die von der Verbindungsposition (PS) getrennt ist, bewegbar zu sein, und
wobei die Drahtwechselvorrichtung (10) ferner eine Bewegungsbahn (R) der Wagen (20) einschließlich einer Kreisungsbahn, die durch die erste Position (P1) und die zweite Position (P2) hindurch geht, umfasst.

2. Drahtwechselvorrichtung nach Anspruch 1, ferner umfassend
einen Rollenhalteabschnitt (C), der lösbar an jedem der Wagen (20a, 20b) angebracht ist, um die eine Rolle oder die Vielzahl von Rollen (25, 26) zu halten.

3. Drahtwechselvorrichtung nach Anspruch 1 oder 2, wobei jeder der Wagen (20a, 20b) dafür konfiguriert ist, durch die Verbindungsposition (PS) zwischen der ersten Position (P1) und der zweiten Position (P2) hindurch gehen zu können.

4. Drahtwechselvorrichtung nach Anspruch 1, 2 oder 3, wobei die Bewegungsbahn (R) eine Drahtvorbereitungsbahn (R4) einschließt, die in der Kreisungsbahn oder an einer Position vorgesehen ist, die von der Kreisungsbahn abzweigt, und durch eine dritte Position (P3) vor einem der in Gebrauch befindlichen Spulengatterständer (2) und eine vierte Position (P4) vor einem anderen der Spulengatterständer (2), die in Bereitschaft sind, hindurch geht.

5. Drahtwechselvorrichtung nach einem der Ansprüche 1 bis 4, wobei die Bewegungsbahn (R) eine Rollenaustauschbahn (R) einschließt, die in der Kreisungsbahn oder an einer Position, die von der Kreisungsbahn abzweigt, vorgesehen ist und vor einem Rollenlager (31) vorbei geht, in dem die eine Rolle oder die Vielzahl von Rollen (25, 26) zum Austausch gelagert ist/sind.

6. Drahtwechselvorrichtung nach einem der Ansprüche 1 bis 5, ferner umfassend eine Steuerung (40), die die Bewegung der Wagen (20) steuert.

7. Drahtwechselverfahren, das auf ein Plattenherstellungssystem (1) angewandt wird, bei dem zwei oder mehr Spulengatterständer (2) nacheinander zur Herstellung einer Platte (A) verwendet werden, wobei jeder der Spulengatterständer (2) eine Vielzahl von Drähten (W) aufnehmen kann,
**dadurch gekennzeichnet, dass** das Drahtwechselverfahren verwendet:
eine Vielzahl von Wagen (20), die in einem Raum (S) bewegbar sind, der zwischen den Spulengatterständern (2) und einer Kalandervorrichtung (6) vorgesehen ist, und an denen eine Rolle oder eine Vielzahl von Rollen (25, 26) zum Ausrichten der Drähte (W), die der Kalandervorrichtung (6) zugeführt werden, lösbar angebracht ist/sind, und
ein Spleißgerät (30), das hintere Endabschnitte (W1b) einer Vielzahl von vorausgehenden ersten Drähten (W1), die durch die Kalandervorrichtung (6) hindurch gehen, mit vorderen Endabschnitten (W2a) einer Vielzahl von nachfolgenden zweiten Drähten (W2), die sich von den Spulengatterständern (2) erstrecken, an einer Verbindungsposition (PS) zwischen der Kalandervorrichtung (6) und den sich in Gebrauch befindlichen Spulengatterständern (2) verbindet, und
das Drahtwechselverfahren Folgendes umfasst:
einen Vorbereitungsprozess für die zweiten Drähte bestehend aus dem Positionieren eines zweiten Drahtwagens (20b) von dem Wagen (20), an dem die Rollen (25, 26) in einem ausgerichteten Zustand der zweiten Drähte an einer zweiten Position (P2) auf einer Seite entgegengesetzt von der Kalandervorrichtung (6) in Bezug auf die Verbindungsposition (PS) angebracht sind, wobei die vorderen Endabschnitte (W2a) der zweiten Drähte (W2) in dem ausgerichteten Zustand der zweiten Drähte ausgerichtet sind;
einen Verbindungsprozess bestehend aus dem Verbinden der hinteren Endabschnitte (W1b) der ersten Drähte (W1) und der vorderen Endabschnitte (W2a) der zweiten Drähte (W2) miteinander unter Verwendung des Spleißgerätes (30);
einen Rollenanbringungsprozess bestehend aus dem Entfernen der Rollen (25, 26) von dem zweiten Drahtwagen (20b), an dem die Rollen (25, 26) in dem ausgerichteten Zustand der zweiten Drähte angebracht sind, und dem Anbringen der entfernten Rollen (25, 26) an der Kalandervorrichtung (6);
einen Wagenvorschubprozess bestehend aus dem Bewegen des zweiten Drahtwagens (20b), an dem die Rollen in dem ausgerichteten Zustand der zweiten Drähte angebracht sind, zu einer ersten Position (P1) auf einer Seite der Kalandervorrichtung (6) in Bezug auf die Verbindungsposition (PS), wobei der Wagenvorschubprozess nach dem Verbindungsprozess und vor dem Rollenanbringungsprozess ausgeführt wird;
einen Spleißgerätrückzugprozess bestehend aus dem Bewegen des Spleißgeräts (30) zu einer Bereitschaftsposition getrennt von der Verbindungsposition (PS), wobei der Spleißgerätrückzugprozess nach dem Verbindungsprozess ausgeführt wird;
einen Rollenentfernungsprozess bestehend aus dem Entfernen der Rollen (25, 26) von der Kalandervorrichtung (6) und dem Anbringen der entfernten Rollen (25, 26) an einem ersten Drahtwagen (20a), der sich an der ersten Position (P1) befindet, wobei der Rollenentfernungsprozess vor dem Verbindungsprozess ausgeführt wird; und
einen Wagenrückzugprozess bestehend aus dem Bewegen des ersten Drahtwagens (20a) von der ersten Position (P1), wobei der Wagenrückzugprozess nach dem Verbindungsprozess und vor dem Wagenvorschubprozess ausgeführt wird.

8. Drahtwechselverfahren nach Anspruch 7,
wobei ein Rollenhalteabschnitt (C), der lösbar an jedem der Wagen (20a, 20b) angebracht ist, um die eine Rolle oder die Vielzahl von Rollen (25, 26) zu halten, verwendet wird, und
der Rollenhalteabschnitt (C) von dem zweiten Drahtwagen (20b) zu der Kalandervorrichtung (6) bewegt wird und die Rollen in dem ausgerichteten Zustand der zweiten Drähte in dem Rollenanbringungsprozess an der Kalandervorrichtung (6) angebracht werden.

9. Drahtwechselverfahren nach Anspruch 7 oder 8, wobei sich der zweite Drahtwagen (20b) in dem Wagenvorschubprozess durch Hindurchgehen durch die Verbindungsposition (PS) zu der ersten Position (P1) bewegt.

10. Drahtwechselverfahren nach Anspruch 7, 8 oder 9, ferner umfassend
einen Rollenaustauschprozess bestehend aus dem Bewegen des ersten Drahtwagens (20a) zu einer Position vor einem Rollenlager (31), in dem die eine Rolle oder die Vielzahl von Rollen zum Austausch gelagert ist/sind, wobei der Rollenaustauschprozess nach dem Wagenrückzugprozess ausgeführt wird.

## Revendications

1. Dispositif de remplacement de fil (10) configuré pour être appliqué à un système de production de feuilles (1) dans lequel deux supports de cannette (2) ou plus sont utilisés, chacun des supports de cannette (2) pouvant loger une pluralité de fils (W), **caractérisé en ce que** le dispositif de remplacement de fil (10) comprend :
une pluralité de chariots (20) qui sont mobiles dans un espace (S) prévu entre les supports de cannette (2) et un dispositif de calandre (6) et auxquels un rouleau ou une pluralité de rouleaux (25, 26) pour aligner les fils (W) fournis au dispositif de calandre (6) est/sont fixé(s) de manière détachable ; et
un épissureur (30) configuré pour relier des parties d'extrémité arrière (W1b) d'une pluralité de premiers fils précédents (W1) traversant le dispositif de calandre (6) à des parties d'extrémité avant (W2a) d'une pluralité de seconds fils suivants (W2) s'étendant à partir des supports de cannette (2) au niveau d'un position d'assemblage (PS) entre le dispositif de calandre (6) et les supports de cannette (2),
dans lequel chacun des chariots (20) est configuré pour être mobile vers une première position (P1) sur un côté du dispositif de calandre (6) par rapport à la position d'assemblage (PS) à laquelle l'épissureur (30) est situé et mobile vers une deuxième position (P2) sur un côté opposé au dispositif de calandre (6) par rapport à la position d'assemblage (PS),
dans lequel l'épissureur (30) est configuré pour être mobile vers la position d'assemblage (PS) et vers une position d'attente (PSa) séparée de la position d'assemblage (PS), et
le dispositif de remplacement de fil (10) comprenant en outre une trajectoire de déplacement (R) des chariots (20) incluant une trajectoire circulaire traversant la première position (P1) et la deuxième position (P2).

2. Dispositif de remplacement de fil selon la revendication 1, comprenant en outre
une partie de maintien de rouleau (C) fixée de manière détachable à chacun des chariots (20a, 20b) pour maintenir le rouleau ou la pluralité de rouleaux (25, 26).

3. Dispositif de remplacement de fil selon la revendication 1 ou 2, dans lequel chacun des chariots (20a, 20b) est configuré pour pouvoir traverser la position d'assemblage (PS) entre la première position (P1) et la deuxième position (P2).

4. Dispositif de remplacement de fil selon la revendication 1, 2 ou 3, dans lequel la trajectoire de déplacement (R) inclut une trajectoire de préparation de fil (R4) prévue dans la trajectoire circulaire ou au niveau d'une position ramifiée à partir de la trajectoire circulaire et traverse une troisième position (P3) devant l'un des supports de cannette (2) en utilisation et une quatrième position (P4) devant un autre des supports de cannette (2) en attente.

5. Dispositif de remplacement de fil selon l'une quelconque des revendications 1 à 4, dans lequel la trajectoire de déplacement (R) inclut une trajectoire d'échange de rouleau (R) prévue dans la trajectoire circulaire ou au niveau d'une position ramifiée à partir de la trajectoire circulaire et passe devant un stockeur de rouleaux (31) dans lequel le rouleau ou la pluralité de rouleaux (25, 26) destiné(s) à l'échange est/sont stocké(s).

6. Dispositif de remplacement de fil selon l'une quelconque des revendications 1 à 5, comprenant en outre
un dispositif de commande (40) qui commande le déplacement des chariots (20).

7. Procédé de remplacement de fil appliqué à un système de production de feuilles (1) dans lequel deux supports de cannette (2) ou plus sont utilisés un par un pour la production d'une feuille (A), chacun des supports de cannette (2) pouvant loger une pluralité de fils (W),
**caractérisé en ce que** le procédé de remplacement de fil utilise :
une pluralité de chariots (20) qui sont mobiles dans un espace (S) prévu entre les supports de cannette (2) et un dispositif de calandre (6) et sur lesquels un rouleau ou une pluralité de rouleaux (25, 26) destinés à aligner les fils (W) fournis au dispositif de calandre (6) est/sont fixé(s) de manière détachable, et
un épissureur (30) qui relie des parties d'extrémité arrière (W1b) d'une pluralité de premiers fils précédents (W1) traversant le dispositif de calandre (6) à des parties d'extrémité avant (W2a) d'une pluralité de seconds fils suivants (W2) s'étendant à partir des supports de cannette (2) au niveau d'une position d'assemblage (PS) entre le dispositif de calandre (6) et les supports de cannette (2) en utilisation, et
le procédé de remplacement de fil comprend :
un processus de préparation de seconds fils consistant à positionner un second chariot de fil (20b) parmi le chariot (20) auquel les rouleaux (25, 26) dans un état d'alignement des seconds fils sont fixés au niveau d'une deuxième position (P2) sur un côté opposé au dispositif de calandre (6) par rapport à la position d'assemblage (PS), les parties d'extrémité avant (W2a) des seconds fils (W2) étant alignées dans l'état d'alignement des seconds fils ;
un processus d'assemblage consistant à relier les parties d'extrémité arrière (W1b) des premiers fils (W1) et les parties d'extrémité avant (W2a) des seconds fils (W2) au moyen de l'épissureur (30) ;
un processus de fixation de rouleaux consistant à retirer les rouleaux (25, 26) du second chariot de fil (20b) auquel les rouleaux (25, 26), dans l'état d'alignement des seconds fils, sont fixés et à fixer les rouleaux (25, 26) retirés au dispositif de calandre (6) ;
un processus d'avancement de chariot consistant à déplacer le second chariot de fil (20b) auquel les rouleaux dans l'état d'alignement des seconds fils sont fixés vers une première position (P1) sur un côté du dispositif de calandre (6) par rapport à la position d'assemblage (PS), le processus d'avancement de chariot étant effectué après le processus d'assemblage et avant le processus de fixation de rouleaux ;
un processus de recul d'épissureur consistant à déplacer l'épissureur (30) vers une position d'attente séparée de la position d'assemblage (PS), le processus de recul d'épissureur étant réalisé après le processus d'assemblage ;
un processus de retrait de rouleaux consistant à retirer les rouleaux (25, 26) du dispositif de calandre (6) et à fixer les rouleaux (25, 26) retirés à un premier chariot de fil (20a) situé au niveau de la première position (P1), le processus de retrait de rouleau étant réalisé avant le processus d'assemblage ; et
un processus de recul de chariot consistant à déplacer le premier chariot de fil (20a) à partir de la première position (P1), le processus de recul de chariot étant réalisé après le processus d'assemblage et avant le processus d'avancement de chariot.

8. Procédé de remplacement de fil selon la revendication 7,
dans lequel une partie de maintien de rouleau (C) fixée de manière détachable à chacun des chariots (20a, 20b) pour maintenir le rouleau ou la pluralité de rouleaux (25, 26) est utilisée, et
la partie de maintien de rouleau (C) est déplacée du second chariot de fil (20b) vers le dispositif de calandre (6) et les rouleaux dans l'état d'alignement des seconds fils sont fixés au dispositif de calandre (6) dans le processus de fixation de rouleau.

9. Procédé de remplacement de fil selon la revendication 7 ou 8, dans lequel le second chariot de fil (20b) se déplace vers la première position (P1) en traversant la position d'assemblage (PS) dans le processus d'avancement de chariot.

10. Procédé de remplacement de fil selon la revendication 7, 8 ou 9, comprenant en outre
un processus d'échange de rouleau consistant à déplacer le premier chariot de fil (20a) vers une position devant un stockeur de rouleaux (31) dans lequel le rouleau ou la pluralité de rouleaux destiné(s) à l'échange est/sont stocké(s), le processus d'échange de rouleau étant réalisé après le processus de recul de chariot.
